# DEMANDE DE BREVET EUROPEEN

(11) **EP 2 157 325 A2**
(43) Date de publication de la demande: **24.02.2010**
(21) Numéro de dépôt: 09405090.3
(22) Date de dépôt: 27.05.2005
(51) Int. Cl.: F16C 11/06

(54) **Palier à rotule**

(62) Demande divisionnaire de: 05104570.6
(71) Demandeur: Jesa SA, 1752 Villars sur Glane (CH)
(72) Inventeur: Oppliger, Jean-Claude, 8155 Niederhasli (CH)
(74) Mandataire: Nuss, Pierre

(57) **Abrégé**

Un palier (1) à rotule comprend en premier élément (2) de réalisation sphérique, muni de deux surfaces fonctionelles (210, 202) dont la première surface définit une surface extterne (201), en tant qu'anneau sphérique délimité par deux deuxièmes faces opposées (202, 203) sensiblement orthogonales à l'axe dudit anneau; et un deuxième élélment (3) réalisé en tant que cage et présentant une troisième surface externe (301) sensiblement cylindrique de révolution, qui forme une liaison mécanique avec un organe de support (4) dudit palier (1) à rotule, lequel élément comporte une quatrième surface interne (302) coopérant avec la première surface externe (201) de l'élément sphérique (2), sachant qu'un jeu radial (5) est prévu entre la première surface externe (201) et la quatrième surface interne (302); et que l'élément (3) formant une cage est scindé, par un plan de joint (307) s'étendant suivant l'axe longitudinal (204) de l'anneau sphérique matérialisé par l'élement sphérique, en deux parties symétriques (303, 304) pouvant être assemblées.

## Description

L'invention se rapporte à un palier à rotule comprenant un premier élément de réalisation sphérique, muni de deux surfaces fonctionnelles dont la première surface définit une surface externe, en tant qu'anneau sphérique délimité par deux deuxièmes faces opposées sensiblement orthogonales à l'axe dudit anneau ; et un deuxième élément réalisé sous la forme d'une cage et présentant une troisième surface externe sensiblement cylindrique de révolution, qui forme une liaison mécanique avec un organe de support dudit palier à rotule, lequel élément comporte une quatrième surface interne coopérant avec la première surface externe de l'élément sphérique, un jeu radial étant prévu entre la première surface externe et la quatrième surface interne.

Des dispositifs, respectivement désignés par "paliers à rotule" ou "rotules simples", sont des dispositifs utilisés pour garantir un guidage en rotation autour d'un axe de rotation prédéterminé en permettant, simultanément, de supporter respectivement des basculements ou des oscillations de cet axe.

Des dispositifs de ce genre peuvent supporter de grandes charges dynamiques, ainsi que de très fortes charges statiques.

Les dispositifs de ce type comprennent généralement deux éléments principaux, parmi lesquels :
- un premier élément de forme partiellement sphérique, désigné par le terme de "élément sphérique" et présentant au moins deux surfaces fonctionnelles dont :
   - une surface externe désignée par "première surface", définissant un anneau sphérique délimité entre deux faces opposées sensiblement orthogonales à l'axe dudit anneau,
   - une surface interne désignée par "deuxième surface" et définissant dans le premier élément, entre les deux faces opposées, une perforation cylindrique dont l'axe longitudinal est notamment confondu avec celui de l'anneau sphérique défini par la première surface, et est sécant au centre géométrique de ladite première surface,
- un deuxième élément de forme annulaire, désigné par le terme de "cage" et présentant au moins deux surfaces fonctionnelles dont :
   - une surface externe désignée par "troisième surface", sensiblement cylindrique de révolution et destinée à permettre une liaison mécanique avec un organe de support du palier,
   - une surface interne désignée par "quatrième surface" et destinée à coopérer avec la première surface dudit premier élément.

Un jeu radial, d'une première valeur prédéterminée, est prévu entre la première surface précitée et la quatrième surface précitée.

Ainsi, l'élément sphérique et la cage sont assemblées avec un certain jeu radial garantissant le bon fonctionnement du dispositif.

La valeur intrinsèque du jeu radial en service que présente un palier à rotule neuf, et le fait que ce jeu en service soit préservé dans le temps, sont des critères qui relèvent de la qualité du palier à rotule précité.

L'invention sera mieux comprise à la lecture de la description fournie, ci-après, à titre d'exemple non limitatif en regard des dessins annexés ; sur ces dessins :

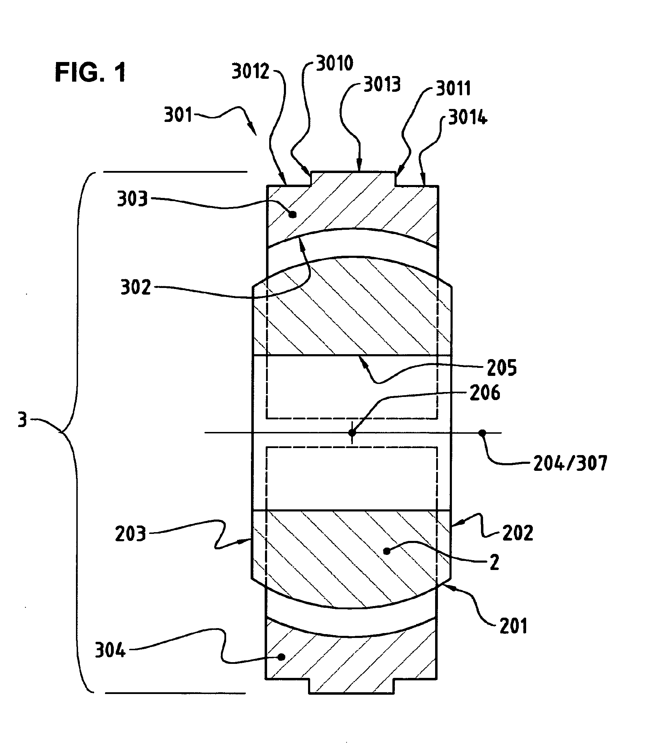

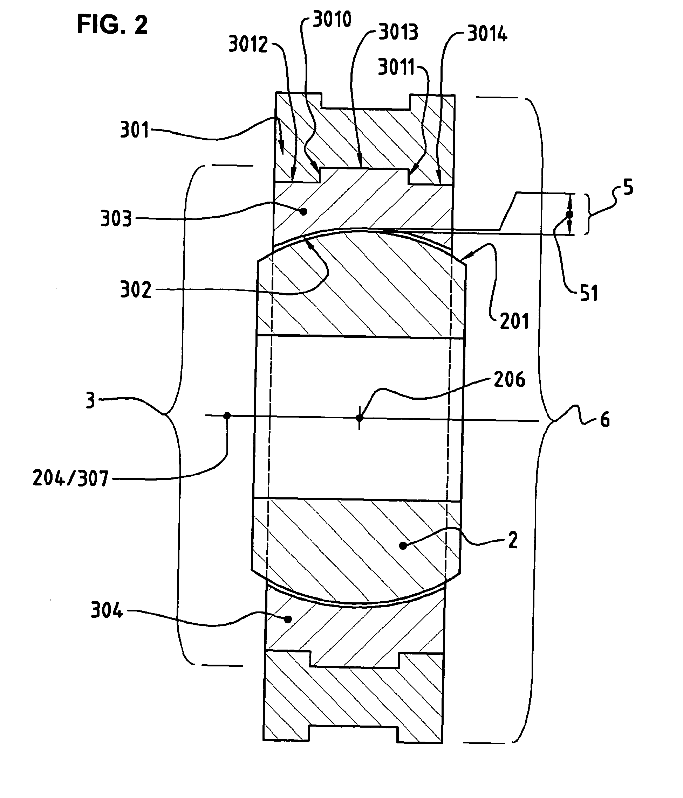

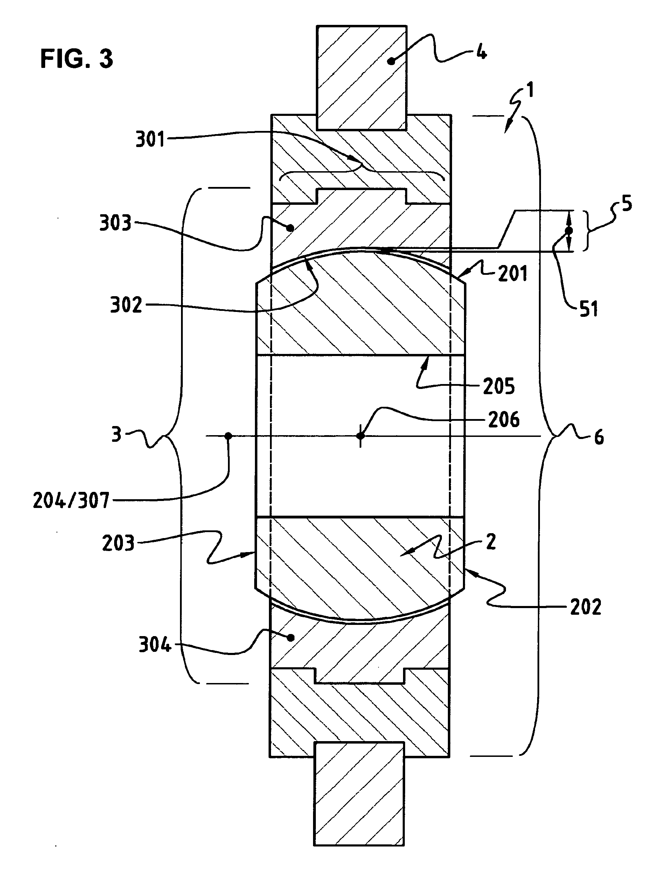

les figures 1 à 3 montrent, en coupe transversale et à échelle agrandie, le palier à rotule conforme à l'invention au cours des différentes phases de la fabrication,
la figure 4 est une vue latérale d'un palier à rotule conforme à l'invention, monté sur un organe de support,
la figure 5 est une vue, en coupe transversale, du palier à rotule de la figure 4.

En se reportant aux dessins, on voit un palier 1 à rotule comprenant les éléments suivants :
- un premier élément 2 de forme partiellement sphérique, désigné par le terme de "élément sphérique" et présentant au moins deux surfaces fonctionnelles 201, 202 parmi lesquelles :
   - une surface externe 201, désignée par "première surface", définissant un anneau sphérique délimité entre deux faces opposées 202, 203 sensiblement orthogonales à l'axe 204 dudit anneau,
   - une surface interne 205 désignée par "deuxième surface" et définissant dans le premier élément 2, entre les deux faces opposées 202, 203, une perforation cylindrique 205 dont l'axe longitudinal est notamment confondu avec celui de l'anneau sphérique défini par la première surface 201, et est sécant au centre géométrique 206 de ladite première surface 201,
- un deuxième élément 3 de forme annulaire, désigné par le terme de "cage" et présentant au moins deux surfaces fonctionnelles 301, 302 parmi lesquelles :
   - une surface externe 301 désignée par "troisième surface", sensiblement cylindrique de révolution et destinée à permettre une liaison mécanique avec un organe 4 de support du palier 1 à rotule,
   - une surface interne 302 désignée par "quatrième surface" et destinée à coopérer avec la première surface 201 du premier élément 2 précité, un jeu radial 5, d'une première valeur prédéterminée 51, étant prévu entre ladite première surface 201 et ladite quatrième surface 302.

A titre d'exemple non limitatif, l'organe 4 de support du palier à rotule consiste en une bielle (non illustrée) à l'une des extrémités de laquelle ledit palier 1 à rotule doit être porté, afin de garantir le guidage d'un arbre (non représenté) qui traverse l'élément sphérique 2 par la perforation cylindrique 205.

D'après une première forme de réalisation non restrictive, la cage ou l'élément 3 comprend, respectivement, deux parties symétriques 303, 304 assemblables selon au moins un premier plan de joint 307 qui contient l'axe longitudinal 204 de l'anneau sphérique matérialisant l'élément sphérique 2.

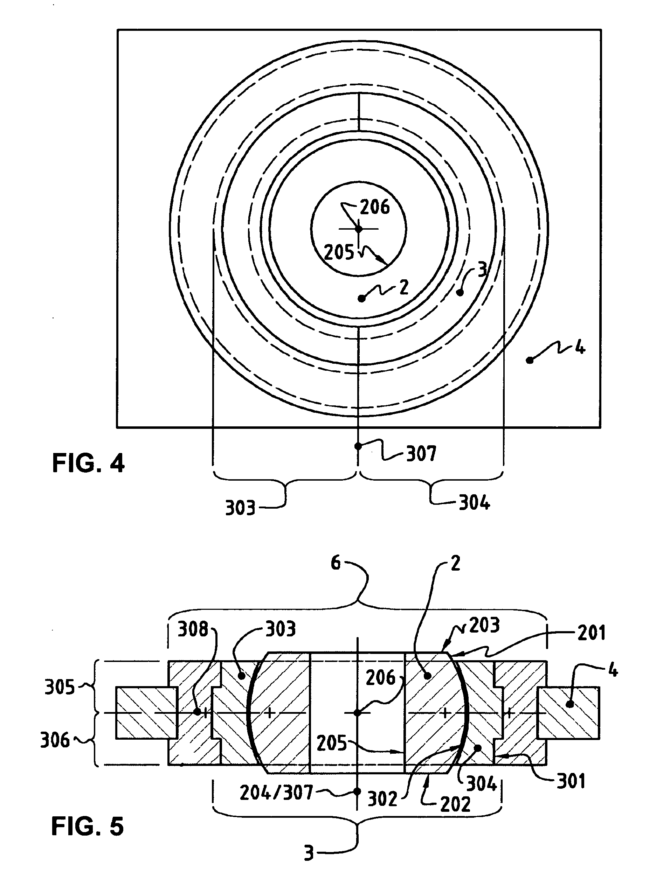

Selon une seconde forme de réalisation non restrictive, la cage ou l'élément 3 comprend, respectivement, deux parties symétriques 305, 306 assemblables le long d'un second plan de joint 308 orthogonal à l'axe longitudinal 204 de l'anneau sphérique matérialisant l'élément sphérique 2 (l'agencement structurel n'est pas illustré en détail, mais la position du plan de joint 308 correspondant est toutefois représentée sur la figure 5 ; et les parties 305, 306, assemblables le long de ce plan de joint 308, sont mises en évidence).

De préférence, mais non limitativement, l'élément de cerclage 6 offre respectivement, dans la direction de l'axe longitudinal 204 de la perforation cylindrique 205 de l'élément sphérique 2, une même dimension respectivement la même épaisseur que l'élément 3 précité.

Au stade de la constitution des différentes parties 303, 304, 305, 306 de la cage respectivement élément 3, l'on ménage, sur ces différentes parties 303, 304, 305, 306, des surfaces 3010, 3011, 3012, 3013 qui sont désignées par "faces réceptrices" 3010, 3011, 3012, 3013 et forment, par conséquent, la surface externe désignée par "troisième surface" 310 et destinée à permettre une liaison mécanique avec un organe de support 4 dédié au palier 1 à rotule ; faces réceptrices 3010, 3011, 3012, 3013 sur lesquelles les actions radiales "R" dudit élément de cerclage peuvent être exercées, ces faces réceptrices 3010, 3011, 3012, 3013, 3014 étant disposées et orientées de manière telle que lesdites actions radiales "R" :
- provoquent la déformation recherchée respective de la cage respectivement élément 3, en vue d'ajuster le jeu radial 5,
- maintiennent entre elles les différentes parties respectives 303, 304, 305, 306 de ladite cage respectivement dudit élément 3, et immobilisent ces différentes parties vis-à-vis dudit élément de cerclage 6 proprement dit.

L'homme de l'art sera en mesure de déterminer, de lui-même, les meilleures formes, dimensions et positions de ces faces réceptrices 3010, 3101, 3012, 3013, lesdites faces réceptrices 3010, 3011, 3012, 3013 consistant néanmoins, par exemple, en :
- au moins une face annulaire 3010, 3011 qui est située dans un plan orthogonal à l'axe longitudinal 206 de la perforation cylindrique 205 de l'élément sphérique 2,
- au moins une face cylindrique 3012, 3013, 3014.

De préférence, les faces réceptrices 3010, 3011, 3012, 3013 consistent en :
- deux faces annulaires 3010, 3011 qui sont opposées,
- trois faces cylindriques 3012, 3013, 3014, dont deux faces réceptrices 3012, 3014 de moindres diamètres, qui bordent une face réceptrice 3013 de plus fort diamètre, les faces annulaires 3010, 3011 étant situées à la jonction desdites faces cylindriques.

L'homme de l'art est également à même de prévoir sur les différentes parties respectives 303, 304, 305, 306 de la cage respectivement de l'élément 3, notamment au niveau des surfaces situées dans le premier (307) ou dans le second (308) plan de joint, des organes complémentaires (non représentés) qui coopèrent par emboîtement et engendrent un prépositionnement relatif desdites différentes parties respectives 303, 304, 305, 306 de la cage respectivement de l'élément 3, ce qui garantit le positionnement adéquat desdites parties avant la constitution de l'élément de cerclage 6.

## Revendications

1. Palier (1) à rotule comprenant un premier élément (2) de réalisation sphérique, muni de deux surfaces fonctionnelles (201, 202) dont la première surface définit une surface externe (201), en tant qu'anneau sphérique délimité par deux deuxièmes faces opposées (202, 203) sensiblement orthogonales à l'axe dudit anneau ; et un deuxième élément (3) réalisé sous la forme d'une cage et présentant une troisième surface externe (301) sensiblement cylindrique de révolution, qui forme une liaison mécanique avec un organe de support (4) dudit palier (1) à rotule, lequel élément comporte une quatrième surface interne (302) coopérant avec la première surface externe (201) de l'élément sphérique (2), un jeu radial (5) étant prévu entre la première surface externe (201) et la quatrième surface interne (302), **caractérisé par le fait que** l'élément (3) formant une cage scindée par un plan de joint (307) s'étendant suivant l'axe longitudinal (204) de l'anneau sphérique, est matérialisé par l'élément sphérique, en deux parties symétriques (303, 304) pouvant être assemblées.

2. Palier (1) à rotule comprenant un premier élément (2) de réalisation sphérique, muni de deux surfaces fonctionnelles (201, 202) dont la première surface définit une surface externe (201), en tant qu'anneau sphérique délimité par deux deuxièmes faces opposées (202, 203) sensiblement orthogonales à l'axe dudit anneau ; et un deuxième élément (3) réalisé sous la forme d'une cage et présentant une troisième surface externe (301) sensiblement cylindrique de révolution, qui forme une liaison mécanique avec un organe de support (4) dudit palier (1) à rotule, lequel élément comporte une quatrième surface interne (302) coopérant avec la première surface externe (201) de l'élément sphérique (2), un jeu radial (5) étant prévu entre la première surface externe (201) et la quatrième surface interne (302), **caractérisé par le fait que** l'élément (3) formant une cage scindée par un plan de joint (308) orthogonal à l'axe longitudinal (307) de l'anneau sphérique, est matérialisé par l'élément sphérique (2), en deux parties symétriques (305, 306) pouvant être assemblées.

3. Palier à rotule selon la revendication 1 ou 2, **caractérisé par le fait que** l'élément sphérique (2) présente une perforation cylindrique (205) dans la direction de l'axe longitudinal (204).

4. Palier à rotule selon l'une des revendications 1 à 3, **caractérisé par le fait que** les parties (303, 304, 305, 306) sont constituées par des organes complémentaires coopérant par emboîtement, au niveau des surfaces situées dans les plans de joint, en vue de leur positionnement réciproque.

5. Palier à rotule selon l'une des revendications 1 à 4, **caractérisé par le fait que** l'élément (3), formant une cage, est entouré par un élément de cerclage (6).

6. Palier à rotule selon la revendication 5, **caractérisé par le fait que** l'élément (3) ou la cage présente respectivement, sur le pourtour extérieur, des faces réceptrices (3010 à 3014) en vue de la liaison mécanique avec l'élément de cerclage (6).

7. Palier à rotule selon la revendication 6, **caractérisé par le fait que** les faces réceptrices (3010 à 3014) définissent au moins une face annulaire (3010, 3011) orthogonale à l'axe longitudinal (204) de la perforation cylindrique (205) de l'élément sphérique (2).

8. Palier à rotule selon la revendication 7, **caractérisé par le fait que** la face annulaire (3010, 3011) formé des faces réceptrices cylindriques (3012 à 3014) de diamètres différents.

9. Palier à rotule selon l'une des revendications 5 à 8, **caractérisé par le fait que** l'élément de cerclage (6) offre, dans la direction longitudinale de la perforation cylindrique (205), le même dimensionnement que l'élément (3).

10. Palier à rotule selon l'une des revendications 1 à 9, **caractérisé par le fait que** l'élément sphérique (2) est constitué d'un matériau métallique ou polymère.

11. Palier à rotule selon les revendications 1 à 10, **caractérisé par le fait que** l'élément de cerclage (6) est constitué, de préférence, d'un matériau polymère déformable sous pression, par exemple par moulage par injection.

12. Palier à rotule selon l'une des revendications 1 à 11, **caractérisé par le fait que** l'élément (3) est constitué, de préférence, d'un matériau polymère.
